# EUROPEAN PATENT SPECIFICATION

(11) **EP 4 382 180 B1**
(45) Date of publication and mention of the grant of the patent: **04.03.2026**
(21) Application number: 22773557.8
(22) Date of filing: 08.07.2022
(51) Int. Cl.: A63B 71/06

(54) **MOBILE PLATFORM FOR PHYSICAL STIMULATION AND REHABILITATION**
MOBILE PLATTFORM ZUR PHYSIKALISCHEN STIMULATION UND REHABILITATION
PLATE-FORME MOBILE POUR LA STIMULATION PHYSIQUE ET LA RÉÉDUCATION

(30) Priority: 15.07.2021 PT 2021117350
(43) Date of publication of application: 12.06.2024
(73) Proprietor: Instituto Superior Técnico, 1049-001 Lisboa (PT)
(72) Inventor: JOSÉ MALHEIRO BERNARDINO, Alexandre, 2720-811 Amadora (PT); ALBERTO ROSADO DOS SANTOS VICTOR, José, 1400-415 Lisboa (PT); MORENO LÓPEZ, Plínio, 1500-418 Lisboa (PT); ADRIANO RIBEIRO, Ricardo, 2610-152 Amadora (PT); JORGE DUARTE NUNES, Ricardo, 2845-115 Amora (PT); ALEXANDRE RODRIGUES SIMÃO, Hugo, 2925-748 Brejos de Azeitão (PT); LUÍSA GRAVE FERNANDES, Ana, 3030-020 Coimbra (PT); FILIPE DOS SANTOS SIMÃO CARDOSO, Heitor, 2750-040 Cascais (PT); MIGUEL GARCIA FIGUEIREDO, Rui, 6270-651 Lapa dos Dinheiros (PT); MANUEL CAEIRO AVELINO, João, 7200-401 Reguengos de Monsaraz (PT)
(74) Representative: do Nascimento Gomes, Rui
(86) International application number: PCT/PT2022/050021
(87) International publication number: WO 2023/287314

(56) References cited:
- EP-A1- 3 299 070
- US-A1- 2019 118 066
- US-A1- 2020 254 295
- US-B1- 7 951 045

## Description

### SCOPE OF THE INVENTION

The present invention falls within the field of serious gaming systems for physical stimulation and rehabilitation.

### BACKGROUND

Physical exercise is a fundamental component for the rehabilitation of motor problems, the prevention of sedentary behaviors, and general well-being. However, particularly in older people or people with motor limitations (as is typically the context of rehabilitation), the motivation for individual exercise is low. In nursing homes, occupational therapists prepare and carry out exercise sessions suited to the target population. In rehab clinics, it is the therapist who prescribes and monitors rehab exercises. In senior gyms it is the trainer of group or personal classes who plans and monitors the exercises. In a domestic context, it is often family members, nurses or home support assistants who try to promote physical activity. All these family members and professionals are faced with the difficult task of preparing exercise sessions that are motivating and fun enough to encourage patients to exercise and stay involved in the exercise program, which often consists of repetitive and sometimes painful movements.

It is known that the promotion of physical exercise through computer games has a high motivating component and a high potential to keep people interested and engaged for long periods. However, many of the existing solutions have few possibilities of configuration and adaptation to different types of games and physical limitations of the players. Moreover, the control of the game is carried out with a fixed set of player movements, so if the player has motor limitations, he may not be able to play that game. Furthermore, the game's visualizations are carried out through video monitors or fixed projection systems that do not allow the easy reconfiguration of space, the transport of systems to other locations, and the possibility of various types of interactions provided by projections in different surfaces.

There are some serious game systems 'Lumoplay' or 'MINDMAZE' with a similar purpose to this invention. The first one presents an interactive game projection solution with non-contact sensors, but it has a fixed installation and is therefore more difficult to transport. Regarding 'MINDMAZE', it is a virtual reality product for rehabilitation of upper limbs only, and it does not have an ambient projection mechanism, which limits the range of exercises to be performed. Also, in the field of rehabilitation systems with virtual reality, the 'EODYNE' and 'GESTURE TEK HEALTH' systems are in the public domain, but do not have mechanisms for projection into the environment or have a fixed projection configuration, and require sleeves or gloves to control the exercise, which makes them more complex to prepare and use.

The patent application CN204293837 discloses a game system for exercise with projections, however, its control requires physical contact by the user (hereinafter referred to as player), through pedals, steering wheels or handles. Furthermore, the system is not easily transportable and does not consider projections on natural surfaces (such as floor or wall), requiring its own projection surface. The same type of technical limitations can be found in the fitness training system disclosed in patent application US2019118066.

### SUMMARY OF THE INVENTION

The present invention consists of a mobile platform for physical games as defined in claim 1. It aims tc provide health care professionals and family members of elderly people and/or people with special physical stimulation needs with a tool that facilitates the preparation and execution of physical exercise sessions.

The main features of the present invention are:
i. Mobility: a mobile gaming platform integrates a processing unit, a motion sensor, and a projector, which are compactly installed on a mobile base (9) with wheels that can be easily transported and accommodated in any interior space, the mobile base having a robotic navigation mechanism for autonomous navigation controlled by the processing unit.
ii. Flexibility: the mobile platform contains mechanical elements that allow the configuration of the direction of projection of games either on the floor or on the wall, according to the available space and the game to be played.
iii. Appearance: The mobile platform is designed to have a friendly and attractive appearance. A design reminiscent of a peaceful animal is proposed, which cannot be associated with pets or wild animals, to reduce the likelihood of generating negative reactions and emotions.

The present invention is as defined in claim 1.

### DESCRIPTION OF THE FIGURES

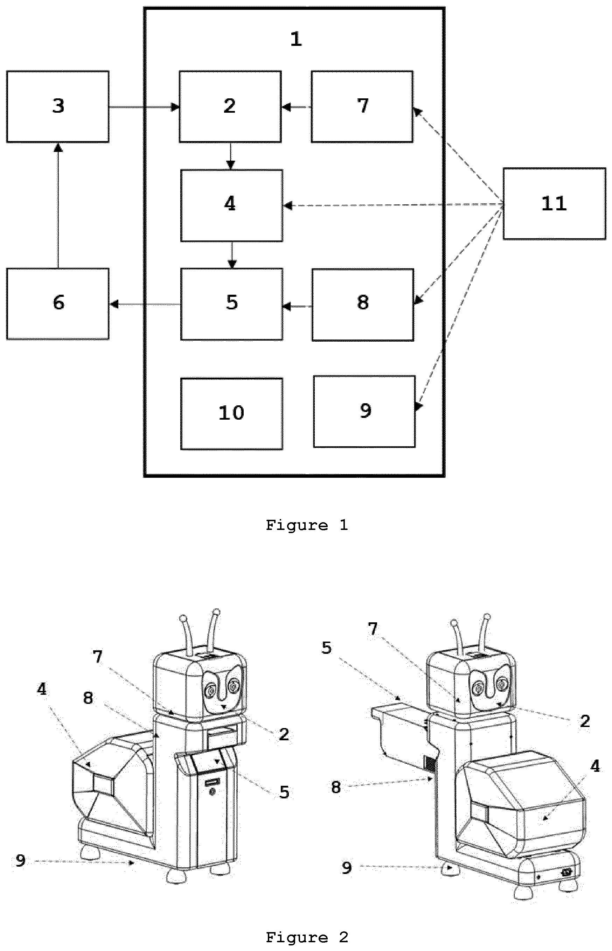

Figure 1 presents the general block diagram of the invention with all the constituent elements of the platform and the actors involved in the use of the system. The numerical reference signs represent:
   1 - mobile platform;
   2 - sensory unit;
   3 - player;
   4 - processing unit;
   5 - projection unit;
   6 - projection surface;
   7 - rotating joint;
   8 - articulated arm;
   9 - mobile base;
   10 - empathic form and appearance;
   11 - operator.
Figure 2 presents the perspective views of the proposed implementation of the mobile platform (1), in both of its projection configurations, i.e., floor projection or wall projection. The numerical reference signs represent:
   2 - sensory unit;
   4 - processing unit;
   5 - projection unit;
   7 - rotating joint;
   8 - articulated arm;
   9 - mobile base.
Figure 3 presents the sectioned profile view of the proposed implementation of the mobile platform (1), in the floor projection configuration. The numerical reference signs represent:
   2 - sensory unit;
   4 - processing unit;
   5 - projection unit;
   7 - rotating joint;
   8 - articulated arm;
   9 - mobile base.
Figure 4 presents the profile view of the proposed implementation of the mobile platform (1) in wall projection configuration. The numerical reference signs represent:
   2 - sensory unit;
   4 - processing unit;
   5 - projection unit;
   7 - rotating joint;
   8 - articulated arm;
   9 - mobile base.

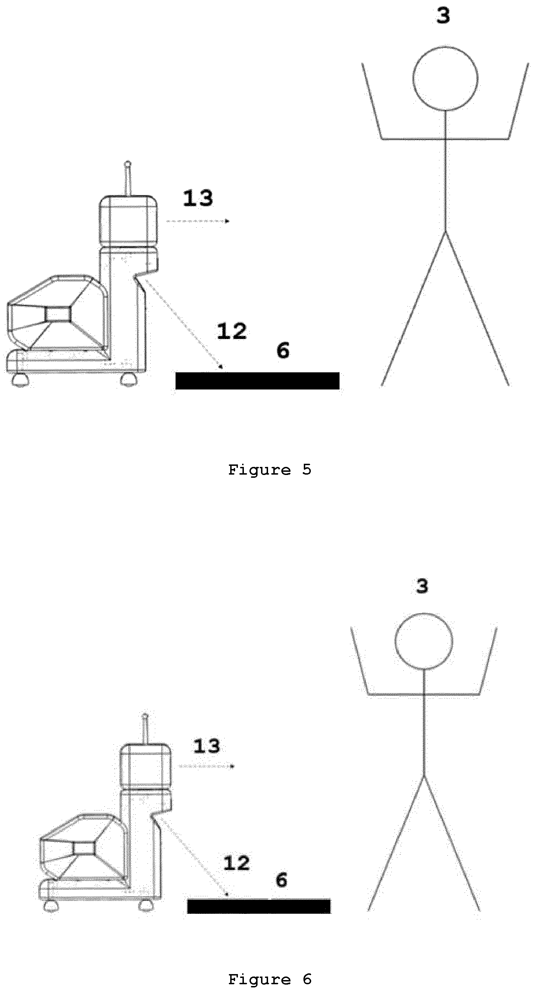

Figure 5 shows the interaction mode of the mobile platform (1) in the floor projection configuration, illustrating the relative positions between the platform (1), the projection surface (6) and the player (3). The projection direction (12) and the player's (3) observation direction (13) are also shown.
Figure 6 shows the interaction mode of the mobile platform (1) in the wall projection configuration, illustrating the relative position between the platform (1), the projection surface (6) and the player (3). The projection direction (12) and the player's (3) observation direction (13) are also shown.

### DETAILED DESCRIPTION OF THE INVENTION

The most general advantageous embodiments of the present invention are described in the Summary of the Invention. These configurations are detailed below, in accordance with other advantageous and/or preferred modes of implementation of the present invention.

The present invention provides a mobile platform (1) that allows the execution of physical stimulation and rehabilitation exercises through augmented reality games, of simple preparation and configuration, adaptable to various spaces and operating conditions.

The exercise is performed by the player through movements of his body and limbs, without the need for physical devices fixed to the body. This is provided by a sensory unit (2), which in one embodiment comprises electro-optical posture sensors, to measure the position of various points on the player's (3) body, such as head, base of neck, shoulders, elbows, wrists, hips, knees, or ankles.

For correct operation, it is necessary to ensure that the player (3) is in a favorable range of distance and in conditions of low occlusion and adequate lighting. In practice, these values depend on the technical specifications of the sensory unit (2), and projection unit (5). With current consumer grade devices, it is necessary that the player (3) is at a distance from the platform (1) which may vary between 1 meter and 5 meters. For this purpose, the platform has a mobile base (9) that allows the effective adjustment of this parameter. In terms of occlusion, it must be ensured that there is a line of sight between the sensory unit (2) and the player (3), and that the player (3) is the person closest to the sensory unit (2) in its field of vision. Regarding the lighting conditions, these depend on the power of the projection unit (5). For best performance, with average power consumer grade projectors, the platform (1) should be used where the external lighting, at the place of the game, does not exceed 200 **lux.**

The player's body movements define key movements that serve to control the elements of the computer program - game - to be executed in the processing unit (4) of the platform (1). The key movements derive from the player's posture and from gestures he performs, which are acquired by the sensory unit (2). Additionally, these key movements may include the identification of vehicles, manipulable objects, graphic shapes, in a complementary way to the player's (3) posture assessment.

Rehabilitation games are usually adapted to guide the player (3) to fulfill the goals of the prescribed physical stimulation of the rehabilitation program. Several game modes allow the player (3) to perform movements in the standing or sitting position and using different types of movements, adapting to different physical conditions of the player (3). The game is a computer program that runs on the processing unit (4) of the mobile platform (1), and that makes all its constituent elements interact.

The augmented reality component of the invention projects the game elements onto a pre-existing smooth natural surface, such as the floor or a wall, that is, without the need to resort to a specific projection surface and, therefore, providing the player (3) with greater immersion, sensation of realism and spatial perception, favoring both the objectives of the exercise and the motivation for its execution. This is achieved through the projection unit (5), which in a particular embodiment includes a short-throw, high-brightness projector. The short-distance feature allows the mobile platform (1) to be very close to the projection surface, favoring the integration of the mobile platform (1) in a compact form. This feature is especially important in the floor projection mode as, if the projector were not of the short-distance type, the platform (1) would have to be at a greater distance from the projection surface (6), which would imply that the platform (1) had a greater height and that could impair its portability. Additionally, the high-brightness feature allows the use of the mobile platform (1) in different lighting conditions, tolerant of smooth textures that may exist on the projection surfaces.

Preferably, the mobile platform (1) of the present invention considers two projection modes: on the floor or on the wall. However, any smooth natural surface, horizontal or vertical, may be used as a projection surface (6), provided it is an unobstructed area. This allows adapting the mobile platform (1) to different types of exercise spaces. The floor projection mode has the advantage of forcing the preparation of an unobstructed area on the ground for the projection, which facilitates the player's (3) mobility. In addition, the projection delimits the space where the player (3) moves, to ensure the proper functioning of the sensory unit (2). The wall projection mode has the advantage of allowing exercises in more limited spaces but requires adjusting the distance from the mobile platform (1) to the wall to better focus the projection, and adjusting the orientation of the sensory unit (2) for an approximately orthogonal direction to the wall.

Switching from floor projection to wall projection is configured through the operation of two mechanisms. One of the mechanisms changes the position of the projection unit (5) from the vertical position to the horizontal position and can be implemented by an articulated arm (8). The other mechanism acts on the sensory unit (2) to improve the conditions of observation of the player's (3) body and can be implemented by a rotating joint (7). In concrete terms, improving the observation conditions of the player's (3) body means adjusting the orientation of the sensory unit (2), to have the player's (3) position in its field of vision. In the floor projection configuration, the player (3) must be in front of the platform (1), while in the wall projection, the player (3) must be behind the platform (1), so the sensory unit (2) will have to rotate about 180° to be able to observe the player (3).

All the elements of the invention are integrated into a compact mobile platform (1), whose main support structure is a wheeled mobile base (9). The wheels allow easy displacement of the platform in the preparation of the exercise space. By construction, the distance of the projection unit (5) to the floor is fixed and calibrated in the factory, ensuring a good focusing of the projection on the floor, whose distance remains unchanged. In wall projection mode, the distance from the platform (1) to the wall must be adjusted by moving the platform (1).

It is also the object of this invention to design the platform with an empathic form and appearance (10) for interaction with the player (3). In this way, an affective link between platform (1) and player (3) is promoted, which increases the level of interaction and enjoyment of the game.

The processing unit (4) of the platform (1) comprises computational requirements adapted to provide interfaces for connecting the processing unit (4) and the projection unit (5), and processing, graphics, and memory capacity to execute computer programs that simulate serious games, and interfaces for an operator (11) to be able to easily interact with the platform (1) - internet connection or wireless connection for keyboard and mouse. In addition to running the serious games, the processing unit (4) comprises computational requirements adapted to execute computer programs configured to have:
i. User's Authentication - players (3) - through password, fingerprint or facial recognition;
ii. Definition of user's profiles - players (3) - and differentiation of access groups between managers (therapists) and players (patients);
iii. Remote access application to allow control from other devices with authentication;
iv. Exercise prescription and scheduling application that sends notifications to the user - player (3);
v. An association table between patients - players (3) - and therapists - operators (11) -, which allows therapists to have privileged access to patients' profiles and agenda, under their authorization;
vi. Recording of the exercise history and personalized settings of each user - player (3) - in its individual profile.

These programs can work in local mode (executed entirely in the processing unit (4)) or in remote mode, the processing unit (4) comprising a wireless connection module for connecting to an external server that executes the programs. In local mode, applications run entirely on the processing unit (4), data entry is performed from a keyboard or any other device with processing capability and adapted to input data that is connected to the processing unit (4), such as a smartphone. Data visualization is carried out through the projection unit (5) or an external monitor. In remote mode, applications run on a remote server, requiring an internet connection. The interaction is done through an internet browser on a computer or external mobile device.

Games are controlled through player (3) postures and movements. These postures and movements define key movements, which are detected by a sensory unit (2), which measures the position of the different limbs of the player's (3) body. In a particular embodiment, the sensory unit comprises sensors of the electro-optical type, such as, for example, a depth camera or an RGB camera. The sensory unit (2) connects to the processing unit (4) which, with the appropriate software, allows the games developed for the platform (1) to use these measures to control the game elements. Games are designed to stimulate movement of the player's (3) limbs relevant to the objective of the exercise or rehabilitation program. Games should allow an easy association between the game elements to be controlled and the corresponding body movements, so that a therapist can easily adapt the game to a patient - player (3) - with physical limitations. Ideally, the game should be able to be played standing or sitting. The player (3) must be placed in front of the sensory unit (2) at an adequate distance and with unobstructed space in all the volume necessary for its movement. In one embodiment, the sensory unit (2) must be in the range of distances from the player (3) between 1m and 5m, it being possible for other people to be in the game space (for example an assistant or the therapist) if they are at a bigger distance to the sensory unit (2) than the player (3) himself.

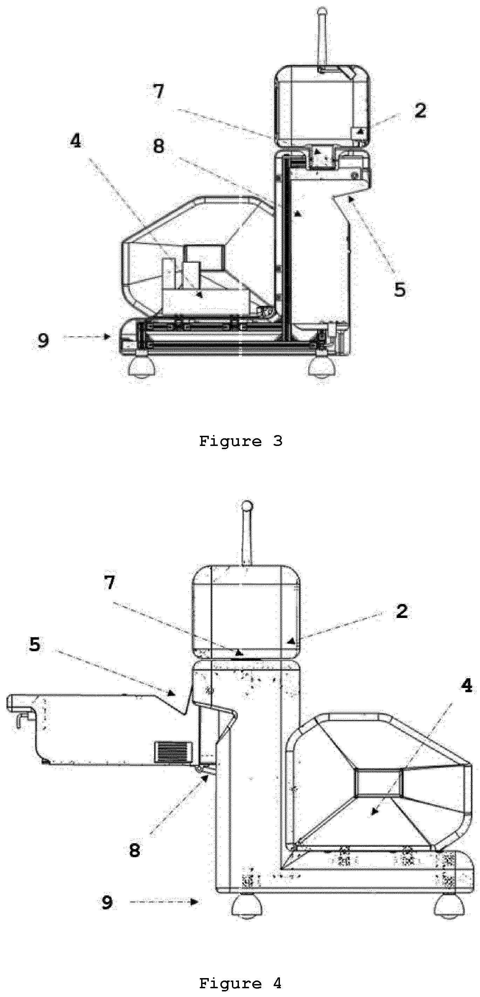

The player (3) observes the game elements projected in the environment, either on the floor (as illustrated in Figure 3) or on a wall (as illustrated in Figure 4). Projection is achieved through a projection unit (5), which in one embodiment of this invention is of the short-distance type, so that it can be close to the projection surface and thus obtain a brighter projection to allow good visibility of the game in varied lighting conditions.

The projection mode must be configured according to the characteristics of the game. The preferred configuration is shown in Figure 3. In this configuration, the projection direction (12) projects the game images onto the floor, in the space between the platform (1) and the player (3). The optical focus of the projection unit (5) is effected once and fixed so that the images are always in focus. In the wall projection configuration (as illustrated in Figure 4), the projection unit (5) is manually moved from the vertical position to the horizontal position with the help of an articulated arm (8), so that the projection direction displays the game images onto a free wall. In this case, the platform (1) is placed between the player (3) and the projection, so the sensory unit (2) must be rotated, manually or automatically, to observe the player (3). The lower part of the wall projection is above the height of the platform (1) to avoid occlusion. The distance from the platform (1) to the wall must be adjusted by moving the mobile base, manually or automatically, so that the image is focused. Additionally, the sensory unit (2) may include a distance sensor to the projection surface (6), with sound or light indicator, to facilitate the placement of the platform (1) next to the wall/floor.

The platform operator (11) can configure the way of using the platform (1). On one hand, they can easily place the platform in a convenient place by pushing the mobile base (9). On the other hand, they can choose the projection mode (floor or wall) by rotating the head that integrates the sensory unit, enabled by the rotating joint (7), in order to direct it towards the player (3), and moving the projection unit (5) from the vertical to horizontal position through the articulated arm (8). Alternatively, the automatic command of the rotating joint (7) and the articulated arm (8) can be achieved through electric motors and a control actuator to be commanded by the processing unit (4), to allow automatic switching between wall and floor projection configurations. Likewise, the movement of the mobile base (9) can be automated, using a robotic base, interconnected with the processing unit (4), comprising actuators, sensors, and autonomous navigation capability.

The interaction with the processing unit (4) for the selection and configuration of games (and other necessary operations) can be done with a mobile device - smartphone - or another computer (if there is an internet connection), or through a wireless keyboard and mouse.

All components are integrated in a platform (1) that is compact, mobile and with an empathic shape and design. These aspects are important not only to facilitate interaction and acceptance by players (3), but also for the entire logistics of preparing and executing exercise sessions by institutions and therapists. The mobility of the platform (1) allows to easily move the platform (1) between different locations allowing to serve more players (3). In addition, it allows for easy storage, and easy preparation of exercise spaces.

## Claims

1. Mobile platform (1) for physical stimulation and rehabilitation, comprising:
- a mobile base (9) to provide the displacement of the platform (1), and on which the following components are installed:
- a sensory unit (2) configured to:
- determine the position of a user in relation to a projection unit (5) and a projection surface (6); and
- detect user-generated key movements;
- a processing unit (4) comprising computational means configured to:
- Convert key movements detected by the sensory unit (2) into computer program instructions; and
- Run a computer program adapted to produce audiovisual content from computer program instructions;
- a projection unit (5) configured to project the audiovisual content onto the projection surface (6);
- an actuation mechanism configured to control the positioning of the projection unit (5) in relation to the projection surface (6);
the mobile platform (1) being **characterized in that** the mobile base (9) comprises a robotic navigation mechanism for autonomous navigation; said robotic navigation mechanism being controlled by the processing unit (4).

2. Platform (1) according to claim 1, **characterized in that** the processing unit (4) comprises an external interface module configured to establish communication with:
- A data input device; and/or
- an external processing device.

3. Platform (1) according to any of the preceding claims, **characterized in that** the processing unit (4) comprises a wireless connection module.

4. Platform (1) according to claims 2 or 3, **characterized in that** the data input device is a computer keyboard or a smartphone connected to the internet.

5. Platform (1) according to claims 2 or 3, **characterized in that** the external processing device is an external server connected to the internet.

6. Platform (1) according to any of the preceding claims, **characterized in that** the sensory unit (2) comprises a posture sensor.

7. Platform (1) according to claim 6, **characterized in that** the posture sensor is of the electro-optical type.

8. Platform (1) according to claim 7, **characterized in that** the electro-optical type posture sensor comprises an RGB camera or a depth camera.

9. Platform (1) according to any of the preceding claims, **characterized in that** the sensory unit (2) comprises a distance sensor from the projection surface (6), with sound or light indicator.

10. Platform (1) according to any of the preceding claims, **characterized in that** the projection unit (5) comprises a short-distance projector.

11. Platform (1) according to any of the preceding claims, **characterized in that** the actuation mechanism comprises an articulated arm (8) and a rotating joint (7).

12. Platform (1) according to claim 11, **characterized in that** the actuation mechanism additionally comprises at least one electric motor and at least one control actuator, configured to automatically operate the articulated arm (8) and the rotating joint (7); said electric motor and control actuator being controlled through the processing unit (4).

## Patentansprüche

1. Mobile Plattform (1) zur körperlichen Stimulation und Rehabilitation, bestehend aus:
- eine mobile Basis (9), die die Verschiebung der Plattform (1) ermöglicht und auf der die folgenden Komponenten installiert sind:
- eine Sensoreinheit (2), die so konfiguriert ist, dass sie:
- die Position eines Benutzers in Bezug auf eine Projektionseinheit (5) und eine Projektionsfläche (6) bestimmt; und
- vom Benutzer erzeugte Tastenbewegungen erfasst;
- eine Verarbeitungseinheit (4), die Rechenmittel umfasst, die konfiguriert sind, um:
- Tastenbewegungen, die von der Sensoreinheit (2) erfasst werden, in Computerprogrammanweisungen umzuwandeln; und
- Ausführen eines Computerprogramms, das geeignet ist, audiovisuelle Inhalte aus Computerprogrammanweisungen zu erzeugen;
- eine Projektionseinheit (5), die zum Projizieren des audiovisuellen Inhalts auf die Projektionsfläche (6) konfiguriert ist;
- einen Betätigungsmechanismus, der dafür konfiguriert ist, die Positionierung der Projektionseinheit (5) in Bezug auf die Projektionsfläche (6) zu steuern;
die mobile Plattform (1) **dadurch gekennzeichnet ist, dass** die mobile Basis (9) einen Roboternavigationsmechanismus zur autonomen Navigation umfasst, wobei der Roboternavigationsmechanismus von der Verarbeitungseinheit (4) gesteuert wird.

2. Plattform (1) nach Anspruch 1, **dadurch gekennzeichnet, dass** die Verarbeitungseinheit (4) ein externes Schnittstellenmodul umfasst, das zur Kommunikation mit Folgendem konfiguriert ist:
- einen Dateneingabegerät; und/oder
- einem externen Verarbeitungsgerät.

3. Plattform (1) nach einem der vorhergehenden Ansprüche, **dadurch gekennzeichnet, dass** die Verarbeitungseinheit (4) ein drahtloses Verbindungsmodul umfasst.

4. Plattform (1) nach Anspruch 2 oder 3, **dadurch gekennzeichnet, dass** das Dateneingabegerät eine Computertastatur oder ein mit dem Internet verbundenes Smartphone ist.

5. Plattform (1) nach Anspruch 2 oder 3, **dadurch gekennzeichnet, dass** das externe Verarbeitungsgerät ein mit dem Internet verbundener externer Server ist.

6. Plattform (1) nach einem der vorhergehenden Ansprüche, **dadurch gekennzeichnet, dass** die Sensoreinheit (2) einen Haltungssensor umfasst.

7. Plattform (1) nach Anspruch 6, **dadurch gekennzeichnet, dass** der Haltungssensor vom elektro-optischen Typ ist.

8. Plattform (1) nach Anspruch 7, **dadurch gekennzeichnet, dass** der elektro-optische Haltungssensor eine RGB-Kamera oder eine Tiefenkamera umfasst.

9. Plattform (1) nach einem der vorhergehenden Ansprüche, **dadurch gekennzeichnet, dass** die Sensoreinheit (2) einen Abstandssensor von der Projektionsfläche (6) mit Schall- oder Lichtanzeige umfasst.

10. Plattform (1) nach einem der vorangehenden Ansprüche, **dadurch gekennzeichnet, dass** die Projektionseinheit (5) einen Kurzdistanzprojektor umfasst.

11. Plattform (1) nach einem der vorhergehenden Ansprüche, **dadurch gekennzeichnet, dass** der Betätigungsmechanismus einen Gelenkarm (8) und ein Drehgelenk (7) umfasst.

12. Plattform (1) nach Anspruch 11, **dadurch gekennzeichnet, dass** der Betätigungsmechanismus zusätzlich mindestens einen Elektromotor und mindestens einen Steueraktuator umfasst, die so konfiguriert sind, dass sie den Gelenkarm (8) und das Drehgelenk (7) automatisch betätigen; wobei der Elektromotor und der Steueraktuator durch die Verarbeitungseinheit (4) gesteuert werden.

## Revendications

1. Plateforme mobile (1) pour la stimulation physique et la rééducation, comprenant :
- une base mobile (9) pour assurer le déplacement de la plateforme (1), et sur laquelle sont installés les composants suivants :
- une unité sensorielle (2) configurée pour :
- déterminer la position d'un utilisateur par rapport à une unité de projection (5) et une surface de projection (6) ; et
- détecter les mouvements clés générés par l'utilisateur ;
- une unité de traitement (4) comprenant des moyens de calcul configurés pour :
- convertir les mouvements clés détectés par l'unité sensorielle (2) en instructions de programme informatique ; et
- exécuter un programme informatique adapté pour produire un contenu audiovisuel à partir d'instructions d'un programme informatique ;
- une unité de projection (5) configurée pour projeter le contenu audiovisuel sur la surface de projection (6) ;
- un mécanisme d'actionnement configuré pour contrôler le positionnement de l'unité de projection (5) par rapport à la surface de projection (6) ;
la plateforme mobile (1) étant **caractérisée en ce que** la base mobile (9) comprend un mécanisme de navigation robotisé pour une navigation autonome ; ledit mécanisme de navigation robotisé étant contrôlé par l'unité de traitement (4).

2. Plateforme (1) selon la revendication 1, **caractérisée en ce que** l'unité de traitement (4) comprend un module d'interface externe configuré pour établir une communication avec :
- un dispositif d'entrée de données ; et/ou
- un dispositif de traitement externe.

3. Plateforme (1) selon l'une quelconque des revendications précédentes, **caractérisée en ce que** l'unité de traitement (4) comprend un module de connexion sans fil.

4. Plateforme (1) selon les revendications 2 ou 3, **caractérisée en ce que** le dispositif d'entrée de données est un clavier d'ordinateur ou un smartphone connecté à Internet.

5. Plateforme (1) selon les revendications 2 ou 3, **caractérisée en ce que** le dispositif de traitement externe est un serveur externe connecté à Internet.

6. Plateforme (1) selon l'une quelconque des revendications précédentes, **caractérisée en ce que** l'unité sensorielle (2) comprend un capteur de posture.

7. Plateforme (1) selon la revendication 6, **caractérisée en ce que** le capteur de posture est de type électro-optique.

8. Plateforme (1) selon la revendication 7, **caractérisée en ce que** le capteur de posture de type électro-optique comprend une caméra RVB ou une caméra de profondeur.

9. Plateforme (1) selon l'une quelconque des revendications précédentes, **caractérisée en ce que** l'unité sensorielle (2) comprend un capteur de distance par rapport à la surface de projection (6), avec un indicateur acoustique ou lumineux.

10. Plateforme (1) selon l'une quelconque des revendications précédentes, **caractérisée en ce que** l'unité de projection (5) comprend un projecteur à courte distance.

11. Plateforme (1) selon l'une quelconque des revendications précédentes, **caractérisée en ce que** le mécanisme d'actionnement comprend un bras articulé (8) et une articulation rotative (7).

12. Plateforme (1) selon la revendication 11, **caractérisée en ce que** le mécanisme d'actionnement comprend en outre au moins un moteur électrique et au moins un actionneur de commande, configurés pour actionner automatiquement le bras articulé (8) et l'articulation rotative (7) ; ledit moteur électrique et ledit actionneur de commande étant commandés par moyen de l'unité de traitement (4).
